# FASCICULE DE BREVET EUROPEEN

(11) **EP 1 557 729 B1**
(45) Date de publication et mention de la délivrance du brevet: **23.04.2008**
(21) Numéro de dépôt: 04001596.8
(22) Date de dépôt: 26.01.2004
(51) Int. Cl.: G04D 3/00, G04B 19/10

(54) **Procédé de fabrication d'index horaires et installation pour sa mise en oeuvre**
Herstellungsverfahren für Zeitindexen und Apparat für seine Implementierung
Method of fabrication of time markers and apparatus for its implementation

(43) Date de publication de la demande: 27.07.2005
(73) Titulaire: Nivarox-FAR S.A., CH-2400 Le Locle (CH)
(72) Inventeur: Bazin, Jean-Luc, 74500 Publier (FR); Bühler, Pierre-André, 2534 Orvin (CH)
(74) Mandataire: Thérond, Gérard Raymond

(56) Documents cités:
- CH-D- 1 680 168
- CH-D- 1 714 066
- FR-A- 1 403 178
- US-A- 3 323 396

## Description

### DOMAINE TECHNIQUE

La présente invention concerne un procédé de fabrication d'index horaires rapportés sur le cadran d'une pièce d'horlogerie au moyen de pieds de fixation pour remplacer tout ou partie des chiffres indiquant les heures, lesdits index étant de très petites dimensions et ayant généralement des formes géométriques simples.

L'invention concerne également une installation robotisée permettant un usinage unitaire desdits index en offrant ainsi une plus grande liberté de choix des formes et une plus grande qualité de finition de l'état de surface des parties visibles après fixation sur le cadran.

### ARRIERE PLAN TECHNOLOGIQUE

Les index ou chiffres disposés sur le tour d'heures, ou sur des cadrans secondaires, sont le plus souvent réalisés par décalque, voire par sérigraphie en donnant l'impression d'avoir été imprimés. Ces index peuvent aussi être obtenus par matriçage de la surface inférieure du cadran, les parties en relief formant les index étant alors polies, vernies, ou recouvertes d'un pigment luminescent, comme décrit par exemple dans le brevet FR 2 308 133. Ces index peuvent également être des pièces rapportées sur le cadran en étant produites par étampage d'une plaque métallique puis collage, par exemple au moyen d'une colle durcissable à chaud, comme indiqué dans le brevet CH 506 111.

Un autre exemple est donné dans le brevet CH 16801680, qui décrit des index fraisés.

Lorsqu'on veut obtenir des pièces de grande qualité, en particulier lorsque le métal utilisé est un métal précieux les index, qui sont alors le plus souvent pourvus de pieds pour leur fixation sur le cadran par chassage dans des logements prévus à cet effet, sont ébauchés par usinage ou étampés dans un profilé, puis repris pour facettage. Les sections employées sont généralement rectangulaire, soit selon un mode "longitudinal", soit selon un mode "transversal".

Selon le premier mode d'exécution, le profilé a une section dans laquelle peut s'inscrire une section droite d'un index, y compris les pieds. Sur une certaine longueur de profilé correspondant à plusieurs index mis bout à bout, on usine d'abord une face pour former l'aspect définitif de la partie visible des index, puis par fraisage on forme les pieds sur la face opposée. Les index sont ensuite tronçonnés et tombent dans un bac pour les opérations ultérieures de lavage et de séchage avant d'être conditionnés en vrac pour expédition. Un mode d'exécution de ce type est décrit plus en détails par exemple dans le brevet US 3 323 396. Cette façon de procéder a pour inconvénient de ne pas permettre une finition de la partie sectionnée, par exemple par diamantage. Il existe également un risque pour que les pieds, qui sont des petites tiges très fines de diamètre inférieur au mm, soient faussés lors de la chute dans le container, ce qui finalement peut conduire à un rebut de 30%, voire davantage.

Selon un deuxième mode d'exécution, le profilé a une section dans laquelle peut s'inscrire le contour choisi pour la base d'un index. Dans une première opération, on effectue le diamantage des faces supérieures et des côtés de l'index. Dans une deuxième opération l'index est serré sur deux surfaces d'appui opposées entre les mors d'une pince en métal dur pour être tronçonné sur une longueur correspondant sensiblement à l'épaisseur de l'index, augmentée de la hauteur des pieds. Dans une troisième opération on procède au fraisage des pieds, puis on libère les index qui tombent dans un bac pour les opérations ultérieures de lavage et séchage en vrac, avant d'être conditionnés. Selon une variante de ce mode d'exécution décrit dans le brevet CH 565 406, l'extrémité du profilé est saisie par une pince sur une longueur correspondant à la hauteur des pieds, puis un tronçon est découpé et amené par un plateau tournant devant un poste de facettage, puis devant une tourelle où il est repris par une autre pince sur des côtés opposés déjà facettés pour effectuer successivement le fraisage des deux pieds. Comme on le voit, dans ce mode d'exécution, dans lequel des surfaces finies sont serrées entre des pinces pour effectuer l'usinage final des pieds, le risque est grand de produire des index présentant des défauts d'aspect visibles conduisant à leur déclassement, voire leur mise au rebut lorsque lesdits index sont destinés à des pièces d'horlogerie haut de gamme.

### RESUME DE L'INVENTION

La présente invention vise donc à pallier les inconvénients de l'art antérieur précité en procurant un procédé et une installation pour la mise en oeuvre de ce procédé permettant de fabriquer des index horaires ne présentant idéalement aucun défaut d'aspect et permettant d'avoir une grande flexibilité au niveau de leur forme.

A cet effet le procédé selon l'invention permet, à partir d'un profilé métallique ayant une section appropriée, de fabriquer par usinage unitaire des index horaires avec au moins un pied de fixation dans le cadran d'une pièce d'horlogerie. Le procédé comporte les étapes fondamentales suivantes :
- dans une première étape on forme une ébauche et on fraise les pieds dans une extrémité du profilé;
- dans une deuxième étape les pieds sont saisis par une pince et l'ébauche est tronçonnée, et
- dans une troisième étape l'index est usiné et diamanté sur toutes ses surfaces visibles à la forme désirée.

Le procédé comporte en outre des étapes secondaires consistant à :
- saisir par un dispositif d'aspiration l'index terminé pour le séparer de la pince et le poser dans un plateau de conditionnement unitaire.
- effectuer le lavage et le séchage d'un ensemble de plusieurs plateaux contenant chacun un lot d'index disposés sur le plateau, et
- conditionner les plateaux en vue de leur expédition.

Comme on le voit, à aucune étape du procédé il n'y a de reprise de pince, ni de traitement en vrac de sorte qu'il n'existe aucune pièce défectueuse, ce qui est particulièrement avantageux sur un plan économique en particulier lorsque le métal du profilé est un métal précieux tel que l'or, ou un alliage d'or.

Selon un mode de réalisation préféré, les pieds sont fraisé en bout de profilé.

Ce procédé est mis en oeuvre grâce à une installation robotisée à commande numérique (CNC) programmable pour produire des index de formes très variées. L'installation comprend un magasin d'approvisionnement en profilé, mobile horizontalement sur une coulisse selon un axe Z₂ en regard d'une pince permettant de saisir les index par les pieds. L'usinage est effectué au moyen d'un robot à quatre degrés de liberté (X, Y, Z₁, ϑ) disposé entre le magasin et la pince. L'installation comporte également un bras manipulateur permettant de saisir des pièces par aspiration.

### BREVE DESCRIPTION DES DESSINS

D'autres caractéristiques et avantages de la présente invention apparaîtront à la lecture de la description détaillée qui suit, en référence aux dessins annexés dans lesquels :
- la figure 1 représente en vue de dessus un exemple d'index pouvant être fabriqué selon le procédé de l'invention;
- la figure 2 représente le même index que celui de la figure 1 en vue de côté;
- la figure 3 représente en vue de dessous en perspective l'index de la figure 1;
- la figure 4 représente la première étape du procédé pour former les pieds;
- la figure 5 représente la deuxième étape conduisant au tronçonnage d'une ébauche permettant de fabriquer un index;
- la figure 6 représente l'index présenté pour la troisième étape de conformation et diamantage;
- la figure 7 est un organigramme reprenant les trois premières étapes et les étapes suivantes jusqu'au conditionnement pour expédition, et
- la figures 8 est une représentation schématique d'une machine automatisée permettant de mettre en oeuvre le procédé.

### DESCRIPTION DETAILLEE DE L'INVENTION

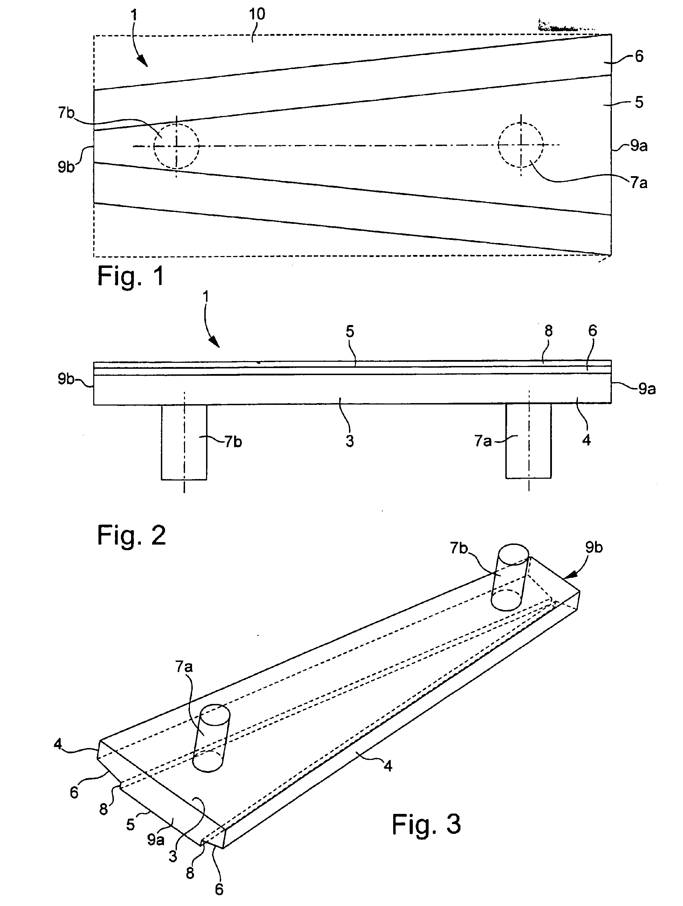

En se référant aux figures 1 à 3 on a représenté à très grande échelle un index dont la partie visible a la forme de deux trapèzes isocèles superposés 3, 5 symétriques par rapport à la ligne médiane. Le plus grand trapèze 3, qui constitue la base de l'index qui sera fixé sur le cadran, est relié au plus petit trapèze 5 par un flanc vertical 4,un plan incliné 6 et par un autre flanc vertical 8. Dans le mode de réalisation décrit, la base formée par le grand trapèze 3 comporte deux pieds 7a, 7b situés dans le plan médian de l'index et venant de matière avec la plaquette trapézoïdale. Bien évidemment l'index pourrait ne comporter qu'un seul pied. A titre purement indicatif, la longueur de l'index est de l'ordre de 3mm, sa plus grande largeur de l'ordre de 1,50 mm et sa hauteur totale, pieds compris, de l'ordre de 0.75 mm, de sorte que le profilé 10 (représenté en pointillés à la figure 1) servant à sa fabrication peut avoir une section rectangulaire légèrement supérieure à 3x1,5 mm².

Il serait également possible de fabriquer ces mêmes index à partir d'un profilé ayant une section trapèze isocèle légèrement supérieure à la base des index compte tenu des opérations de diamantage. Comme on le verra par la suite, le procédé permet également de fabriquer des index ne comportant aucun flanc vertical, les facettes 4, 6 et 8 ainsi que les extrémités 9a, 9b ayant des formes arrondies.

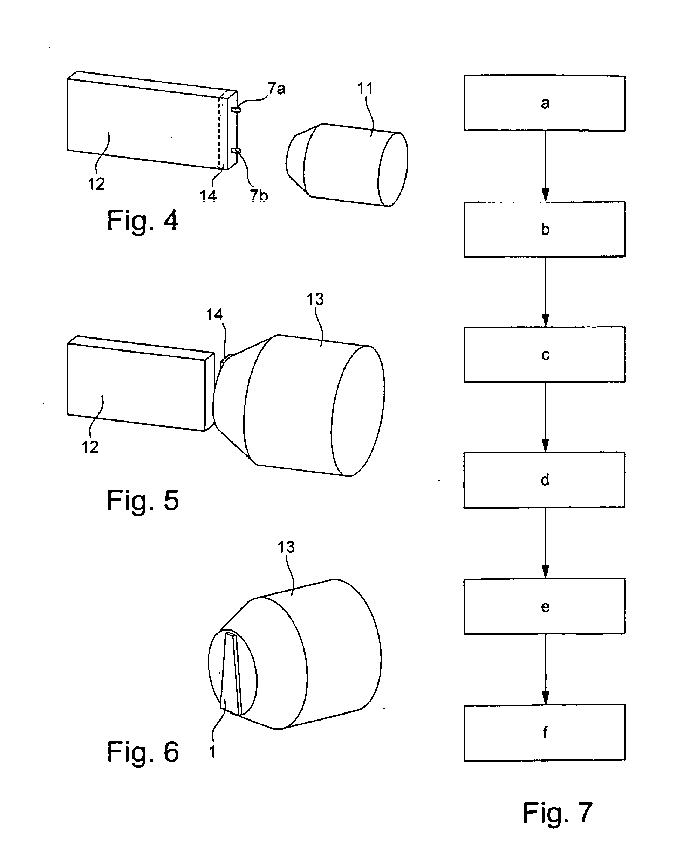

En se référant maintenant aux figures 4 à 7, on décrit ci-après un mode d'exécution du procédé selon l'invention. La matière première pour fabriquer les index est constituée par un profilé 12 de section rectangulaire 10. Il s'agit par exemple d'une barre en or de 2 m de long.

Dans une première étape "a" représentée à la figure 4, on effectue la conformation des deux pieds 7a, 7b au moyen d'une fraise en bout assujettie à une broche de fraisage 11. A titre purement indicatif les pieds 7a, 7b ont une hauteur supérieure ou égale à 0,30 mm et un diamètre d'environ 0,25 mm.

Malgré de si petites dimensions, et de façon surprenante, les pieds présentent une résistance mécanique suffisante pour pouvoir être saisis par une pince 13 qui est, dans l'exemple représenté à la figure 5, la broche d'un contre-poupée. Dans cette deuxième étape "b" une ébauche 14 est découpée du profilé 12.

Dans une troisième étape "c", représentée à la figure 6, l'ébauche 14 étant toujours maintenue par les pieds 7a, 7b, on peut donner à l'ébauche 14 la forme désirée et effectuer le diamantage de toutes les surfaces visibles pour obtenir un index fini 1 dont aucune surface ne peut présenter de marques de pince.

On remarquera également que, toutes les manipulations étant effectuées par pincement des pieds, il n'est plus nécessaire d'avoir deux flancs parallèles et que la partie visible de l'index peut ne comporter que des courbes et avoir par exemple la forme d'une goutte d'eau.

Les étapes suivantes d, e, f concernent les opérations finales avant expédition. Dans l'étape "d" l'index 1 est enlevé de la contre-poupée 13 par un bras manipulateur comportant un dispositif de saisie par aspiration et déposé dans un plateau pouvant contenir par exemple un lot de 100 index. Dans une étape "e" les index disposés sur les plateaux sont lavés et séchés. Dans une dernière étape "f" ces mêmes plateaux sont emballés par exemple au moyen d'un film plastique rétractable pour maintenir les index en place en vue de leur expédition.

Le procédé qui vient d'être décrit correspond à ce qui avait été désigné en préambule par "mode d'exécution transversal". Sans sortir du cadre de l'invention, on peut envisager également un mode d'exécution longitudinal, la première étape "a" consistant alors à usiner les pieds, non pas dans la section du profilé, mais dans l'une de ses faces, puis dans la deuxième étape "b" à saisir l'ébauche par les pieds, les étapes suivantes étant inchangées. Dans cette variante d'exécution le profilé peut avantageusement avoir une forme en T, la barrette verticale ayant pour largeur le diamètre des pieds.

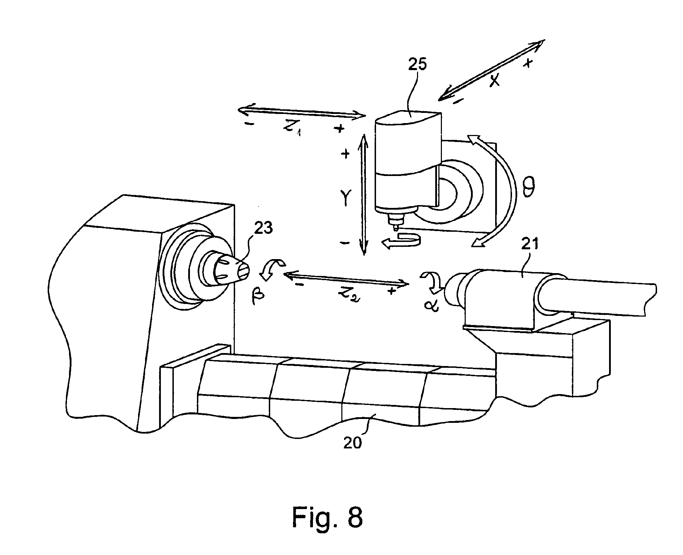

La figure 8 représente schématiquement à titre d'exemple une installation permettant la mise en oeuvre du procédé, notamment lorsqu'on effectue l'usinage des pieds en bout de profilé. L'installation comprend un magasin d'approvisionnement 21 en profilé, mobile sur une coulisse 20 selon un axe Z₂ en regard d'une pince 23 , ces deux éléments possédant également un degré de liberté en rotation α,β autour de l'axe Z₂. Un robot porte-outils 25 à quatre degrés de liberté (X, Y, Z₁, ϑ) est disposé entre le magasin 21 et la pince 23. L'installation comporte également un bras manipulateur (non représenté) permettant de saisir des pièces par aspiration, l'ensemble étant piloté par un dispositif à commande numérique (CNC) programmable pour produire de façon unitaire des index avec des formes très variées. Dans une première étape le magasin 21, par déplacement sur la coulisse 20 selon l'axe Z₂, se positionne en regard du robot 25 pour usiner un premier pied, puis par rotation d'un angle α = 180° pour usiner le deuxième pied. Le robot 25 se retire et le magasin 21 avance jusqu'à la pince 23 qui saisit les pieds. Le robot 25 se déplace alors selon l'axe Z₁ pour tronçonner dans une deuxième étape l'ébauche et le magasin 21 se retire jusqu'à sa position initiale. Dans une troisième étape le robot se déplace selon l'axe Z₁ vers la pince 23 pour effectuer les opérations de mise en forme et de diamantage grâce à ses quatre degrés de liberté et à l'orientation possible de l'ébauche par une rotation β de la pince. Les opérations suivantes de déchargement, lavage, séchage et conditionnement ne seront pas décrites, comme correspondant à des opérations usuelles dans ce domaine.

## Revendications

1. Procédé de fabrication d'index horaires (1) avec pieds (7a, 7b), permettant la fixation de la base (3) desdits index sur un cadran, à partir d'un profilé métallique (12), comportant les étapes consistant à :
- dans une première étape, fraiser les pieds (7a, 7b) dans une extrémité du profilé (12) et ébaucher le profil
- dans une deuxième étape, saisir les pieds (7a, 7b) dans une pince (13) et tronçonner une ébauche (14), et
- dans une troisième étape, terminer l'ébauche (14) à la forme désirée pour l'index et effectuer le diamantage de toutes les surfaces visibles.

2. Procédé selon la revendication 1, **caractérisé en ce qu**'il comporte en outre les étapes suivantes :
- saisir par un dispositif d'aspiration l'index terminé pour le séparer de la pince (13) et le poser dans un plateau de conditionnement unitaire
- effectuer le lavage et le séchage d'un ensemble de plusieurs plateaux contenant chacun un lot d'index disposés sur le plateau, et
- conditionner les plateaux en vue de leur expédition

3. Procédé selon la revendication 1, **caractérisé en ce que**, dans la première étape, les pieds sont fraisés en bout du profilé (12).

4. Procédé selon la revendication 1, **caractérisé en ce que**, dans la première étape, les pieds sont fraisés dans sur une surface du profilé,

5. Procédé selon la revendication 1, **caractérisé en ce que** le profilé a une section rectangulaire dans laquelle peut s'inscrire soit la section de l'index (1 ) avec ses pieds, soit le contour de la base (3) dudit index.

6. Procédé selon la revendication 3, **caractérisé en ce que** le profilé (12) a la même forme que la base d'un index avec une section légèrement supérieure.

7. Procédé selon la revendication 1, **caractérisé en ce que** les index (1) obtenus ne comportent pas de flancs verticaux opposés.

8. Procédé selon la revendication 1, **caractérisé en ce que** le profilé (12) est en or, ou alliage d'or.

9. Installation pour la fabrication d'index horaires (1) avec pieds (7a, 7b) à partir d'un profilé métallique (12) comportant un magasin (21) d'approvisionnement en profilé, mobile horizontalement sur une coulisse (20) selon un axe Z₂, et en rotation α autour de l'axe Z₂, **caractérisée en ce qu**'elle comprend :
- une pince (23), pour saisir les pieds d'un index (1), disposé en regard du magasin (21) et en rotation β autour de l'axe Z₂;
- un robot porte-outils (25) à quatre degrés de liberté (X, Y, Z₁, ϑ) permettant le formage et le diamantage des parties visible de l'index, et
- un dispositif à commande numérique (CNC) permettant de piloter le magasin (21), la pince (23) et le robot (25) en fonction de la forme particulière souhaitée pour l'index.

10. Installation selon la revendication 9, **caractérisé en ce qu**'elle comporte en outre un bras manipulateur à préhension pneumatique, également piloté par la commande CNC pour décharger les index horaire et les poser dans des plateaux en vue des étapes ultérieures de lavage, séchage et conditionnement pour expédition.

## Claims

1. Method of manufacturing hour symbols (1) with feet (7a, 7b), for securing the base (3) of said symbols to a dial, from a metal profile (12), comprising the steps of:
- a first step in which the feet (7a, 7b) are milled in one end of the profile (12) and the preform is preformed,
- a second step in which the feet (7a, 7b) are gripped in a clamp (13) and the preform (14) is cut, and
- a third step in which the preform (14) is finished in the shape desired for the symbol and all of the visible surfaces are diamondpolished.

2. Method according to claim 1, **characterized in that** it further includes the following steps:
- gripping the finished symbol via a suction device to separate it from the clamp (13) and placing it in an individual packaging tray,
- washing and drying a set of several trays each containing a batch of symbols disposed on the tray, and
- packing the trays for dispatch.

3. Method according to claim 1, **characterized in that**, in the first step, the feet are milled at the end of the profile (12).

4. Method according to claim 1, **characterized in that** in the first step, the feet are milled on one surface of the profile.

5. Method according to claim 1, **characterized in that** the profile has a rectangular cross section in which either the section of the symbol (1) with its feet, or the contour of the base (3) of said symbol can be inscribed.

6. Method according to claim 3, **characterized in that** the profile (12) has the same shape as the base of a symbol with a slightly larger section.

7. Method according to claim 1, **characterized in that** the symbols (1) obtained do not have opposite vertical flanks.

8. Method according to claim 1, **characterized in that** the profile (12) is made of gold or gold alloy.

9. Installation for manufacturing hour symbols (1) with feet (7a, 7b) from a metal profile (12) including a profile feed magazine (21), horizontally mobile on a slide (20) along an axis Z₂ and in rotation α about axis Z₂, **characterized in that** it includes:
- a clamp (23), for gripping the feet of the symbol (1), disposed opposite the magazine (21), and in rotation β about axis Z₂;
- a tool carrier robot (25) with four degrees of freedom (X, Y, Z₁, ϑ) for shaping and diamondpolishing the visible parts of the symbol, and
- a digitally controlled device (CNC) for driving the magazine (21), the clamp (23) and the robot (25) as a function of the particular shape desired for the symbol.

10. Installation according to claim 9, **characterized in that** it further includes a manipulator arm with a pneumatic clamp, also driven by the CNC control device for unloading the hour symbols and placing them in trays for the subsequent steps of washing, drying and packing for dispatch.

## Patentansprüche

1. Verfahren zum Herstellen von Stundenanzeigestegen (1) mit Füßen (7a, 7b), die die Befestigung der Grundfläche (3) der Anzeigestege an einem Zifferblatt ermöglichen, ausgehend von einem Metallprofil (12), das die Schritte umfasst, die darin bestehen:
- in einem ersten Schritt die Füße (7a, 7b) in einem Ende des Profils (12) auszufräsen und das Profil vorzuschneiden,
- in einem zweiten Schritt die Füße (7a, 7b) in einer Greifeinrichtung (13) zu erfassen und einen Rohling (14) als Teilstück abzutrennen, und
- in einem dritten Schritt den Rohling (14) in die gewünschte Form für den Anzeigesteg endzubearbeiten und das Feinschleifen aller sichtbaren Oberflächen auszuführen.

2. Verfahren nach Anspruch 1, **dadurch gekennzeichnet, dass** es außerdem die folgenden Schritte umfasst:
- Erfassen des endbearbeiteten Anzeigestegs mit einer Saugvorrichtung, um ihn von der Greifeinrichtung (13) zu lösen und um ihn in eine Einheitenverpackungsplatte zu legen,
- Ausführen eines Waschens und Trocknens einer Gesamtheit aus mehreren Platten, die jeweils ein Los aus auf der Platte angeordneten Anzeigestegen enthalten, und
- Verpacken der Platten für ihren Versand.

3. Verfahren nach Anspruch 1, **dadurch gekennzeichnet, dass** im ersten Schritt die Füße am Ende des Profils (12) ausgefräst werden.

4. Verfahren nach Anspruch 1, **dadurch gekennzeichnet, dass** im ersten Schritt die Füße in einer Oberfläche des Profils ausgefräst werden.

5. Verfahren nach Anspruch 1, **dadurch gekennzeichnet, dass** das Profil einen rechtwinkligen Querschnitt besitzt, in den entweder der Querschnitt des Anzeigestegs (1) mit seinen Füßen oder der Umriss der Basis (3) des Anzeigestegs einbeschrieben werden kann.

6. Verfahren nach Anspruch 3, **dadurch gekennzeichnet, dass** das Profil (12) die gleiche Form wie die Basis eines Anzeigestegs mit einem etwas größeren Querschnitt hat.

7. Verfahren nach Anspruch 1, **dadurch gekennzeichnet, dass** die erhaltenen Anzeigestege (1) keine gegenüberliegenden vertikalen Flanken aufweisen.

8. Verfahren nach Anspruch 1, **dadurch gekennzeichnet, dass** das Profil (12) aus Gold oder einer Goldlegierung besteht.

9. Anlage für die Herstellung von Stundenanzeigestegen (1) mit Füßen (7a, 7b) ausgehend von einem Metallprofil (12), die ein Lager (21) für die Bereitstellung der Profile aufweist, das auf einer Gleitschiene (20) längs einer Achse Z₂ horizontal beweglich und um die Achse Z₂ um einen Winkel α drehbar ist, **dadurch gekennzeichnet, dass** sie umfasst:
- eine Greifeinrichtung (23), um die Füße eines Anzeigestegs (1) zu ergreifen, die sich gegenüber dem Lager (21) befindet und um die Achse Z₂ um einen Winkel β drehbar ist;
- einen Werkzeugträger-Roboter (25) mit vier Freiheitsgraden (X, Y, Z₁, ϑ), der die Formarbeit und das Feinschleifen der sichtbaren Teile des Anzeigestegs ermöglicht, und
- eine Vorrichtung (CNC) zur numerischen Steuerung, die die Steuerung des Lagers (21), der Greifeinrichtung (23) und des Roboters (25) als Funktion der für den Anzeigesteg gewünschten besonderen Form ermöglicht.

10. Anlage nach Anspruch 9, **dadurch gekennzeichnet, dass** sie außerdem einen Manipulatorarm mit Druckluftgriff umfasst, der ebenfalls durch die CNC-Steuerung gesteuert wird, um die Stundenanzeigestege auszugeben und sie im Hinblick auf die späteren Schritte des Waschens, Trocknens und Verpackens für den Versand in Platten zu legen.
